(19) Europäisches Patentamt
European Patent Office
Office européen des brevets

(11) **EP 4 099 636 A1**

(12) **EUROPEAN PATENT APPLICATION**
published in accordance with Art. 153(4) EPC

(43) Date of publication:
**07.12.2022 Bulletin 2022/49**

(21) Application number: **21768129.5**

(22) Date of filing: **10.03.2021**

(51) International Patent Classification (IPC):
**H04L 12/24** (2006.01)

(52) Cooperative Patent Classification (CPC):
**H04L 41/00; H04L 43/00**

(86) International application number:
**PCT/CN2021/079993**

(87) International publication number:
**WO 2021/180127 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2020 CN 202010162242**

(71) Applicant: **Huawei Technologies Co., Ltd.
Longgang
Shenzhen, Guangdong 518129 (CN)**

(72) Inventors:
• **ZHENG, Ren**
  **Shenzhen, Guangdong 518129 (CN)**
• **XUE, Li**
  **Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(54) **CAPACITY EXPANSION METHOD FOR NETWORK DEVICE AND RELATED APPARATUS**

(57) This application provides a network device capacity expansion method and a related device. The method includes: obtaining network performance data of a target network device; determining a state of the target network device based on the network performance data of the target network device; and determining, based on the state of the target network device, whether to perform capacity expansion for the target network device. In the foregoing technical solution, whether a capacity expansion operation needs to be performed on a network device can be determined in a timely manner based on a state of the network device. Therefore, the foregoing technical solution can reduce an amount of time for capacity expansion and reduce losses caused by network capacity expansion.

FIG. 7

## Description

This application claims priority to Chinese Patent Application No. 202010162242.6, filed with the China National Intellectual Property Administration on March 10, 2020 and entitled "NETWORK DEVICE CAPACITY EXPANSION METHOD AND RELATED APPARATUS", which is incorporated herein by reference in its entirety.

## TECHNICAL FIELD

This application relates to the field of communications technologies, and more specifically, to a network device capacity expansion method and a related apparatus.

## BACKGROUND

As a quantity of users increases or data traffic requested by users grows, existing capacities of network devices may not meet user requirements. Therefore, capacity expansion needs to be performed for network devices.

Currently, a common capacity expansion method is based on a fixed threshold. Specifically, performance indicator data of a network device is periodically collected, and a collected performance indicator value is compared with the fixed threshold. If the collected performance indicator value is greater than the threshold, capacity expansion needs to be performed for the network device. If the collected performance indicator value is less than or equal to the threshold, capacity expansion does not need to be performed for the network device.

This capacity expansion method is passive. It takes a long time (about three to six months) from identifying a need of capacity expansion for a network device to completing the capacity expansion. During this period, user experience may be affected, which may lead to user churn. In addition, revenue of service providers is positively correlated to traffic. Before the capacity expansion of network device is complete, the traffic that should have been increased is suppressed, which may affect the revenue of service providers.

## SUMMARY

This application provides a network device capacity expansion method and a related apparatus, to reduce an amount of time for network device capacity expansion and reduce losses caused by network capacity expansion.

According to a first aspect, an embodiment of this application provides a network device capacity expansion method, including: obtaining network performance data of a target network device; determining a state of the target network device based on the network performance data of the target network device; and determining, based on the state of the target network device, whether to perform capacity expansion for the target network device.

In the foregoing technical solution, it only needs to learn about current throughput information and packet loss information of the target network device to determine a current state of the target network device. The current state of the target network device may reflect currently suppressed traffic of the target network device. The suppressed traffic is traffic that should be transmitted continuously at a throughput but falls back due to packet loss. Alternatively, in other words, the suppressed traffic is traffic that should be reached as compared with a baseline network device, but is suppressed due to a packet loss rate. In this way, whether capacity expansion needs to be performed for the target network device may be determined in time based on the current state of the target network device, without a need to wait until congestion occurs. In other words, the foregoing technical solution can reduce an amount of time for capacity expansion, thereby reducing adverse effects (for example, user churn, revenue decrease of service providers, and the like) caused by time-consuming capacity expansion.

Optionally, the network performance data may include throughput information and packet loss information.

With reference to the first aspect, in a possible implementation of the first aspect, the determining a state of the target network device based on the network performance data of the target network device includes: determining a baseline network device; determining state decision information based on network performance statistics data of the baseline network device, where packet loss statistics information of the baseline network device satisfies target packet loss information; and determining the state of the target network device based on the network performance data of the target network device and the state decision information.

Optionally, the network performance statistics data may include throughput statistics information and packet loss statistics information.

With reference to the first aspect, in a possible implementation of the first aspect, the determining a state of the target network device based on the network performance data of the target network device includes: determining the state of the target network device based on a state decision model and the network performance data of the target network device.

In the foregoing technical solution, the state of the target network device may be directly determined by using a pre-trained decision model. In this way, the state of the target network device can be determined more quickly.

The state of the target network device is used to indicate suppressed traffic. For example, the state of the target network device may be a suppressed traffic volume. For another example, the state of the target network device may be a suppressed traffic ratio.

With reference to the first aspect, in a possible implementation of the first aspect, the state decision model is determined in the following manner: determining N network devices, where a bandwidth of each of the N network devices is the same as a bandwidth of the target network device, and N is a positive integer greater than or equal to 2; obtaining network performance statistics data of the N network devices, where the network performance statistics data includes throughput statistics information and packet loss statistics information; determining a baseline network device and M sets of network performance statistics data based on the packet loss statistics information of the N network devices, where a plurality of pieces of packet loss statistics information included in each of the M sets of network performance statistics data are the same, packet loss statistics information of the baseline network device satisfies target packet loss information, packet loss statistics information included in each of the M sets of network performance statistics data does not satisfy the target packet loss information, and M is a positive integer greater than or equal to 1; and determining the state decision model based on the network performance statistics data of the baseline network device and the M sets of network performance statistics data.

With reference to the first aspect, in a possible implementation of the first aspect, the determining the state decision model based on the network performance statistics data of the baseline network device and the M sets of network performance statistics data includes: determining baseline throughput information based on throughput statistics information of the baseline network device, where the baseline throughput information is used to indicate a probability distribution of the baseline network device with different throughput information; determining reference throughput information i based on throughput statistics information in an ith set of network performance statistics data in the M sets of network performance statistics data, where the reference throughput information i is used to indicate a probability distribution of the ith set of network performance statistics data with different throughput statistics information when packet loss statistics information is $R_i$, $R_i$ is packet loss statistics information in the ith set of network performance statistics data, and i= 1, ..., or M; and determining the state decision model based on M pieces of reference throughput information and the baseline throughput information.

With reference to the first aspect, in a possible implementation of the first aspect, the state decision model includes K pieces of traffic suppression reference information, the K pieces of traffic suppression reference information are in a one-to-one correspondence with K levels of throughput information, a jth piece of traffic suppression reference information in the K pieces of traffic suppression reference information is used to indicate traffic suppression information corresponding to a network device with different packet loss information when the throughput information is at a jth level, j=1, ..., or K, and K is a positive integer greater than or equal to 1; and the determining a state of the target network device based on a state decision model and the network performance data of the target network device includes: determining target traffic suppression reference information from the K pieces of traffic suppression reference information based on throughput information of the target network device; and determining the state of the target network device based on the target traffic suppression reference information and packet loss information of the target network device.

With reference to the first aspect, in a possible implementation of the first aspect, the determining a baseline network device includes: determining at least one candidate network device from a plurality of network devices based on bandwidths of the plurality of network devices, where the candidate network device is a network device, in the plurality of network devices, whose bandwidth is the same as a bandwidth of the target network device; determining packet loss statistics information of the at least one candidate network device; and determining the baseline network device based on the packet loss statistics information of the at least one candidate network device.

With reference to the first aspect, in a possible implementation of the first aspect, throughput statistics information of the at least one candidate network device satisfies target throughput information.

With reference to the first aspect, in a possible implementation manner of the first aspect, the throughput statistics information is throughput information collected in a first time period, and the packet loss statistics information is packet loss information collected in a second time period.

According to a second aspect, an embodiment of this application provides a management device. The management device includes units configured to implement any possible implementation of the method design in the first aspect. The management device may be a computer device or a component (for example, a chip or a circuit) configured for a computer device.

According to a third aspect, an embodiment of this application provides a management device, including a transceiver and a processor. Optionally, the management device further includes a memory. The processor is configured to control the transceiver to send and receive signals. The memory is configured to store a computer program. The processor is configured to invoke the computer program from the memory and run the computer program, so that the management device is enabled to perform the method in any possible implementation of the method design in the first aspect.

According to a fourth aspect, an embodiment of this application provides an electronic apparatus. The electronic apparatus may be a management device configured to implement the method design in the first aspect, or may be a chip disposed in a management device. The electronic apparatus includes a processor. The processor is coupled to a memory, and may be configured to execute instructions and/or program code in the memory, to implement the method in any possible implementation of the method design in the first aspect. Optionally, the electronic apparatus further includes a memory. Optionally, the electronic apparatus further includes a communication interface, and the processor is coupled to the communication interface.

When the electronic apparatus is a management device, the communication interface may be a transceiver or an input/output interface.

When the electronic apparatus is a chip disposed in a management device, the communication interface may be an input/output interface.

Optionally, the transceiver may be a transceiver circuit. Optionally, the input/output interface may be an input/output circuit.

According to a fifth aspect, an embodiment of this application provides a computer program product. The computer program product includes computer program code. When the computer program code is run on a computer, the computer is enabled to perform the method in any possible implementation of the method design in the first aspect.

According to a sixth aspect, an embodiment of this application provides a computer-readable medium. The computer-readable medium stores program code. When the computer program code is run on a computer, the computer is enabled to perform the method in any possible implementation of the method design in the first aspect.

**BRIEF DESCRIPTION OF DRAWINGS**

FIG. 1 is a schematic flowchart of a network device capacity expansion method according to an embodiment of this application;

FIG. 2 is a schematic diagram of a baseline probability accumulation curve;

FIG. 3 is a schematic flowchart of another network device capacity expansion method according to an embodiment of this application;

FIG. 4 is a schematic flowchart of a method for determining a state decision model;

FIG. 5 shows baseline throughput information and a plurality of pieces of reference throughput information;

FIG. 6 is a schematic diagram of M suppression ratios in a range of (80%,85%];

FIG. 7 is a schematic flowchart of a network device capacity expansion method according to an embodiment of this application;

FIG. 8 is a schematic structural block diagram of a management device according to an embodiment of this application; and

FIG. 9 is a schematic structural block diagram of a management device according to an embodiment of this application.

**DESCRIPTION OF EMBODIMENTS**

The following describes technical solutions in this application with reference to the accompanying drawings.

A network device in embodiments of this application may be a network device in a mobile bearer network, for example, a network device at an access layer, a network device at an aggregation layer, a network device at a core layer, or a network device at a backbone layer of the mobile bearer network. Alternatively, the network device may be another network device that supports Transmission Control Protocol (Transmission Control Protocol, TCP) communication, for example, a switch having layer-4 functions.

This application presents aspects, embodiments, or features by using a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may also be used.

In addition, in embodiments of this application, terms such as "for example" and "such as" are used to represent giving an example, an illustration, or a description. Any embodiment or design scheme described as an "example" in this application should not be explained as being more preferred or having more advantages than another embodiment or design scheme. Exactly, the word "for example" is intended to present a concept in a specific manner.

In embodiments of this application, "corresponding (corresponding, relevant)" and "corresponding (corresponding)" may be interchangeably used sometimes. It should be noted that meanings expressed by the terms are consistent when differences are not emphasized.

In embodiments of this application, sometimes a subscript, for example, $W_1$, may be written in an incorrect form, for example, W1. Expressed meanings are consistent when differences are not emphasized.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in one embodiment", "in some embodiments", "in some other embodiments", and "in still some other embodiments" that appear at different places in this specification do not necessarily refer to a same embodiment, but mean "one or more but not all embodiments", unless otherwise specially emphasized in another manner. The terms "comprise", "include", "have", and other variants thereof all mean "include but is not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, and c may indicate: a, b, c, a and b, a and c, b and c, or a, b, and c, where a, b, and c may be singular or plural.

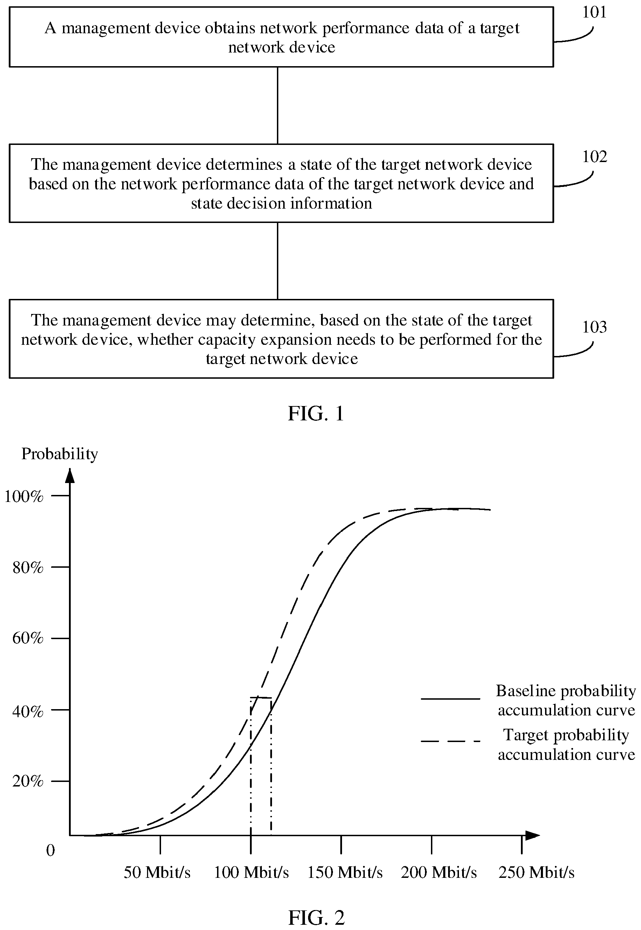

FIG. 1 is a schematic flowchart of a network device capacity expansion method according to an embodiment of this application.

101. A management device obtains network performance data of a target network device.

The network performance data includes throughput information and packet loss information.

The throughput information and packet loss information are collected periodically. A collection period may be 1 minute, 5 minutes, or 15 minutes. The collection period may be adjusted as required.

Optionally, in some embodiments, the throughput information may be throughput (throughput). In some embodiments, the throughput may be an average throughput over a plurality of collection periods. In some other embodiments, the throughput may be a maximum throughput over a plurality of collection periods. In some other embodiments, the throughput may also be a throughput over a single collection period. In some embodiments, the throughput may be a downlink throughput. In some other embodiments, the throughput may be an uplink throughput. In some other embodiments, the throughput may be a sum of a downlink throughput and an uplink throughput.

Optionally, in some other embodiments, the throughput information may be a transmission rate. In some embodiments, the transmission rate may be an average transmission rate over a plurality of collection periods. In some other embodiments, the transmission rate may be a maximum transmission rate over a plurality of collection periods. In some other embodiments, the transmission rate may also be a transmission rate over a single collection period. In some embodiments, the transmission rate may be a downlink transmission rate. In some other embodiments, the transmission rate may be an uplink transmission rate.

Optionally, in some other embodiments, the throughput information may be bandwidth usage. In some embodiments, the bandwidth usage may be average bandwidth usage over a plurality of collection periods. In some other embodiments, the bandwidth usage may be maximum bandwidth usage over a plurality of collection periods. In some other embodiments, the bandwidth usage may also be bandwidth usage over a single collection period. In some embodiments, the bandwidth usage may be downlink bandwidth usage. In some other embodiments, the bandwidth usage may be uplink bandwidth usage. In some other embodiments, the bandwidth usage may be sum bandwidth usage.

Optionally, in some embodiments, the packet loss information may be a packet loss rate. In some embodiments, the packet loss rate may be an average packet loss rate over a plurality of collection periods. In some other embodiments, the packet loss rate may be a largest packet loss rate over a plurality of collection periods. In some other embodiments, the packet loss rate may also be a packet loss rate over a single collection period. In some embodiments, the packet loss rate may be a packet loss rate of downlink transmission. In some other embodiments, the packet loss rate may be a packet loss rate of uplink transmission. In some other embodiments, the packet loss rate may be a total packet loss rate of uplink transmission and downlink transmission.

Optionally, in some other embodiments, the packet loss information may be a quantity of lost packets. In some embodiments, the quantity of lost packets may be an average quantity of lost packets over a plurality of collection periods. In some other embodiments, the quantity of lost packets may be a maximum quantity of lost packets over a plurality of collection periods. In some other embodiments, the quantity of lost packets may also be a quantity of lost packets over a single collection period. In some embodiments, the quantity of lost packets may be a quantity of lost packets in downlink transmission. In some other embodiments, the quantity of lost packets may be a quantity of lost packets in uplink transmission. In some other embodiments, the quantity of lost packets may be a sum of a quantity of lost packets in downlink transmission and a quantity of lost packets in uplink transmission.

In some embodiments, the throughput information may correspond to the packet loss information. If the throughput information is downlink throughput information, the packet loss information is downlink packet loss information. For example, if the throughput information is downlink bandwidth usage, the packet loss information is a downlink packet loss rate. If the throughput information is uplink throughput information, the packet loss information is uplink packet loss information. For example, if the throughput information is uplink bandwidth usage, the packet loss information is an uplink packet loss rate.

In some other embodiments, the throughput information may not correspond to the packet loss information. For example, the throughput information may be a downlink throughput, while the packet loss information may be a total packet loss rate.

For ease of description, in the following embodiments, it is assumed that the throughput information is a downlink throughput, and the packet loss information is a downlink packet loss rate.

The management device may be a server or a computer device (for example, a desktop computer, a notebook computer, or a tablet computer). The management device may obtain the throughput information and the packet loss information by using an existing measurement method. For example, the management device may obtain the throughput information and the packet loss information of the target network device by using the Two-Way Active Measurement Protocol (Two-way Active Measurement Protocol, TWAMP), Y.1731, in-situ Flow Information Telemetry (in-situ Flow Information Telemetry, iFIT), or the like. For a specific implementation manner in which the management device obtains the throughput information and the packet loss information, reference may be made to related materials of the adopted measurement method. For brevity, details are not described herein again.

102. The management device determines a state of the target network device based on the network performance data of the target network device and the state decision information.

The state decision information may be determined by the management device based on network performance statistics data of a baseline network device. The management device may first determine the baseline network device. The baseline network device may also be referred to as a benchmark network device, a benchmark device, a standard device, or the like. A bandwidth of the baseline network device is the same as a bandwidth of the target network device. That the bandwidth of the baseline network device is the same as the bandwidth of the target network device may be that a downlink bandwidth of the baseline network device is the same as a downlink bandwidth of the target network device, or an uplink bandwidth of the baseline network device is the same as an uplink bandwidth of the target network device. For ease of description, a bandwidth referred to in the following embodiments is a downlink bandwidth, unless otherwise specified.

The management device may determine the baseline network device in the following manner:

The management device determines at least one candidate network device from a plurality of network devices based on bandwidths of the plurality of network devices, where the candidate network device is a network device, in the plurality of network devices, whose bandwidth is the same as a bandwidth of the target network device.

For example, it is assumed that the bandwidth of the target network device is 100 Mbit/s. The plurality of network devices include 20 network devices whose bandwidth is 100 Mbit/s each, 10 network devices whose bandwidth is 100 Mbit/s each, and 30 network devices whose bandwidth is 300 Mbit/s each. In this case, the management device may determine the 20 network devices whose bandwidth is 100 Mbit/s each as the candidate network devices.

Optionally, in some embodiments, after determining at least one network device whose bandwidth is the same as the bandwidth of the target network device, the management device may further determine throughput statistics information of each of the at least one network device, and determine the at least one candidate network device based on the throughput statistics information of the at least one network device. Unless otherwise specified, a bandwidth of each of the "at least one network device" mentioned in the description of how to determine the at least one candidate network device is the same as the bandwidth of the target network device.

The throughput statistics information may be a plurality of pieces of throughput information obtained through statistics collection within a period of time. For example, the throughput statistics information is a plurality of pieces of throughput information collected in one or more days. Optionally, in some embodiments, the throughput statistics information may be a plurality of pieces of throughput information collected in a whole day of one or more days. Optionally, in some other embodiments, the throughput information may be a plurality of pieces of throughput information collected in a first time period of one or more days. In some embodiments, the first time period may be obtained by collecting statistics on historical traffic of the target network device or a plurality of network devices. For example, the first time period may be a time period in which traffic exceeds a traffic threshold. In some other embodiments, the first time period may be a time period determined based on experience. For example, the first time period may be from 9:00 to 22:00.

The management device may determine that the at least one candidate network device as a network device, in the at least one network device, whose throughput statistics information satisfies target throughput information.

For example, the target throughput information may be a total throughput threshold. If a sum of a plurality of downlink throughputs included in throughput statistics information of a network device (a bandwidth of the network device is the same as a bandwidth of the target network device) exceeds the total throughput threshold, the network device can be used as the candidate network device. For another example, the target throughput information may be an average throughput threshold. If an average downlink throughput of a plurality of pieces of throughput information included in throughput information of a network device (a bandwidth of the network device is the same as a bandwidth of the target network device) exceeds the average throughput threshold, the network device can be used as the candidate network device. The total throughput threshold or the average throughput threshold may be an empirical value, or may be determined based on the at least one network device. The total throughput threshold is used as an example. The management device may determine a total throughput of each of the at least one network device, sort the total throughput of the at least one network device in descending order, and determine a total throughput of a network device whose ranking is a preset value or a preset percentage as the total throughput threshold.

For another example, the target throughput information may be a preset percentage. The management device may determine a total throughput (or an average throughput) of each of the at least one network device, sort the total throughput (or the average throughput) of the at least one network device in descending order, and determine a network device whose ranking is top $x_1$% as the candidate network device. $x_1$% is the preset percentage.

The management device determines packet loss statistics information of the at least one candidate network device. The packet loss statistics information may be a plurality of pieces of packet loss information obtained through statistics collection within a period of time. For example, the packet loss statistics information is a plurality of pieces of packet loss information collected in one or more days. Optionally, in some embodiments, the packet loss statistics information may be a plurality of pieces of packet loss information collected in a whole day of one or more days. Optionally, in some other embodiments, the packet loss information may be a plurality of pieces of packet loss information collected in a second time period of one or more days. In some embodiments, the second time period may be obtained by collecting statistics on historical traffic of the target network device or a plurality of network devices. For example, the second time period may be a time period in which traffic exceeds a traffic threshold. In some other embodiments, the second time period may be a time period determined based on experience. For example, the second time period may be from 9:00 to 22:00. In some embodiments, the second time period may be the same as the first time period. In some other embodiments, the second time period may be different from the first time period.

The plurality of pieces of packet loss information included in the packet loss statistics information in a one-to-one correspondence with the plurality of pieces of throughput information in the throughput statistics information. It is assumed that the packet loss statistics information includes 10 packet loss rates, and the throughput statistics information includes 10 downlink throughputs. In this case, the 10 downlink throughputs are in a one-to-one correspondence with the 10 packet loss rates. In the following, it is assumed that the 10 downlink throughputs are respectively a throughput 1 to a throughput 10, and the 10 packet loss rates are respectively a packet loss rate 1 to a packet loss rate 10. It is assumed that throughput 1 corresponds to packet loss rate 1, throughput 2 corresponds to packet loss rate 2, throughput 3 corresponds to packet loss rate 3, and so on. That throughput 1 corresponds to packet loss rate 1 may be: A throughput of a network device at packet loss rate 1 is throughput 1. Similarly, that throughput 2 corresponds to packet loss rate 2 may be: A throughput of the network device at packet loss rate 2 is throughput 2, and so on.

The management device may determine the baseline network device based on the packet loss statistics information of the at least one candidate network device. Packet loss statistics information of the baseline network device satisfies the target packet loss information.

For example, in some embodiments, the management device may determine an average packet loss rate of each candidate network device in the at least one candidate network device. The management device may determine the baseline network device based on the average packet loss rate of the at least one candidate network device. In some embodiments, the average packet loss rate may be a preset value. In some other embodiments, the average packet loss rate may be a minimum value of the average packet loss rate of the at least one candidate network device.

In some embodiments, the average packet loss rate of the baseline network device is a target average packet loss rate. The target average packet loss rate is the target packet loss information.

In some other embodiments, the average packet loss rate of the baseline network device is the target average packet loss rate, a difference between a maximum packet loss rate of the baseline network device and the target average packet loss rate is not greater than a first preset value, and a difference between a minimum packet loss rate of the baseline network device and the target average packet loss rate is not greater than a second preset value. The first preset value and the second preset value may be the same or different. For example, the average packet loss rate is 0.001%, and the first preset value and the second preset value may be 0.000001%. In other words, if a packet loss rate of one of the at least one candidate network device is 0.001 % ± 0.000001 %, the candidate network device may be used as the baseline network device. In this case, the target packet loss information may further include the first preset value and the second preset value.

For another example, in some other embodiments, the management device may determine a maximum packet loss rate of each of the at least one candidate network device, and determine a candidate network device whose maximum packet loss rate is a target maximum packet loss rate as the baseline network device. The target maximum packet loss rate is the target packet loss information. In some embodiments, the target maximum packet loss rate may be a preset value. In some other embodiments, the target maximum packet loss rate may be a minimum value of a packet loss rate of the at least one candidate network device.

After determining the baseline network device, the management device may determine the state decision information based on the network performance statistics data of the baseline network device. The network performance statistics data of the baseline network device may include throughput statistics information and packet loss statistics information of the baseline network device.

The management device may determine a probability accumulation curve based on the network performance statistics data of the baseline network device. For ease of description, the probability accumulation curve determined based on the network performance data of the baseline network device is referred to as a baseline probability accumulation curve. The state decision information may include the baseline probability accumulation curve. FIG. 2 is a schematic diagram of the baseline probability accumulation curve.

The management device may determine a probability accumulation curve based on the network performance statistics data of the baseline network device. For ease of description, the probability accumulation curve determined based on the network performance data of the baseline network device is referred to as a target probability accumulation curve. The state decision information may further include the target probability accumulation curve.

The target network device may be a network device with a relatively stable packet loss rate. For example, the packet loss rate of the target network device may be stable at $0.1\% \pm 0.001\%$.

That the management device determines the state of the target network device based on the network performance data of the target network device and the state decision information may include: The management device determines suppressed traffic based on the throughput of the target network device, the target probability accumulation curve, and the baseline probability accumulation curve. The suppressed traffic may be used as the state of the target network device.

FIG. 2 is used as an example. It is assumed that a throughput of the target network device is 100 Mbit/s. The management device may determine a probability corresponding to the throughput of 100 Mbit/s based on the target probability accumulation curve. For example, it is assumed that the probability corresponding to the throughput of 100 Mbit/s is 0.42. Then, the management device may determine a throughput corresponding to the probability of 0.42 based on the baseline probability accumulation curve. It is assumed that the throughput corresponding to the probability 0.42 is 120 Mbit/s based on the baseline probability accumulation curve. Now when the probability is 0.42, a difference between the throughput corresponding to the baseline probability accumulation curve and the throughput corresponding to the target probability accumulation curve is suppressed traffic. In other words, the suppressed traffic in the foregoing example is 20 Mbit/s.

That the management device determines the state of the target network device based on the network performance data of the target network device and the state decision information may include: The management device determines a suppressed traffic ratio based on the throughput of the target network device, the target probability accumulation curve, and the baseline probability accumulation curve. The suppressed traffic ratio may be used as the state of the target network device.

FIG. 2 is used as an example again. It is assumed that a throughput of the target network device is 100 Mbit/s. The management device may determine a probability corresponding to the throughput of 100 Mbit/s based on the target probability accumulation curve. For example, it is assumed that the probability corresponding to the throughput of 100 Mbit/s is 0.42. Then, the management device may determine a throughput corresponding to the probability of 0.42 based on the baseline probability accumulation curve. It is assumed that the throughput corresponding to the probability 0.42 is 120 Mbit/s based on the baseline probability accumulation curve. Now when the probability is 0.42, a ratio of the throughput corresponding to the target probability accumulation curve to the throughput corresponding to the reference probability accumulation curve is the suppressed traffic ratio. In other words, the suppressed traffic ratio in the foregoing example is 5/6. In some other embodiments, it is assumed that when the probability is 0.42, the ratio of the throughput corresponding to the target probability accumulation curve to the throughput corresponding to the baseline probability accumulation curve is $R_{0.42}$. The suppressed traffic ratio may be $1-R_{0.42}$. In other words, the suppressed traffic ratio in the foregoing example is 1/6.

103. The management device may determine, based on the state of the target network device, whether capacity expansion needs to be performed for the target network device.

That the management device may determine, based on the state of the target network device, whether capacity expansion needs to be performed for the target network device may include: The management device may determine, based on the state of the target network device, whether a capacity expansion threshold is met. If the capacity expansion threshold is met, the management device performs capacity expansion for the target network device or reminds an administrator to perform capacity expansion for the target network device. If the capacity expansion threshold is not met, the management device does not need to perform capacity expansion for the target network device or does not need to remind the administrator to perform capacity expansion for the target network device.

For example, it is assumed that the state of the target network device is suppressed traffic. If the management device determines that the suppressed traffic of the target network device is greater than a preset traffic threshold (that is, a capacity expansion threshold), the management device may perform capacity expansion for the target network device or remind the administrator to perform capacity expansion for the target network device.

That the management device may determine, based on the state of the target network device, whether capacity expansion needs to be performed for the target network device may include: The management device may determine a cumulative state of the target network device based on the state of the target network device, and determine whether the cumulative state of the target network device meets a capacity expansion threshold. If the capacity expansion threshold is met, the management device performs capacity expansion for the target network device or reminds the administrator to perform capacity expansion for the target network device. If the capacity expansion threshold is not met, the management device does not need to perform capacity expansion for the target network device or does not need to remind the administrator to perform capacity expansion for the target network device.

For example, it is assumed that the state of the target network device is a suppressed traffic volume. The cumulative state of the target network device may be a sum of suppressed traffic volumes determined by the management device by performing the method shown in FIG. 1 for one or more times. For example, the management device performs the method shown in FIG. 1 on the target network device three times, and obtains suppressed traffic volumes of 20 Mbit/s, 30 Mbit/s, and 50 Mbit/s, respectively. In this case, the cumulative state of the target network device may be 100 Mbit/s, that is, a sum of 20 Mbit/s, 30 Mbit/s, and 50 Mbit/s. If the management device determines that the sum of suppressed traffic volumes of the target network device is greater than a preset traffic threshold (that is, the capacity expansion threshold), the management device may perform capacity expansion for the target network device or remind the administrator to perform capacity expansion for the target network device.

For another example, it is assumed that the state of the target network device is a suppressed traffic ratio. The cumulative state of the target network device may be an average value of suppressed traffic ratios that are determined by the management device by performing the method shown in FIG. 1 for one or more times. If the management device determines that the average value of suppressed traffic ratios of the target network device is greater than a preset traffic ratio (that is, the capacity expansion threshold), the management device may perform capacity expansion for the target network device or remind the administrator to perform capacity expansion for the target network device.

That the management device may determine, based on the state of the target network device, whether capacity expansion needs to be performed for the target network device may include: The management device may determine a cumulative state of the target network device based on the state of the target network device, determine a ranking of the target network device based on the cumulative state of the target network device, and perform capacity expansion for the target network device or remind the administrator to perform capacity expansion for the target network device based on the ranking of the target network device.

For example, the management device may separately perform the method shown in FIG. 1 on network device 1 to network device 10 for a plurality of times. A total suppressed traffic of network device 1 to network device 10 is obtained. Then, the management device ranks suppressed traffic of network device 1 to network device 10. For example, the management device may rank network device 1 to network device 10 in descending order of suppressed traffic. In some embodiments, the management device may present a ranking result and/or a total suppressed traffic of each network device. The administrator can determine whether to perform capacity expansion for top-ranking network devices based on information presented by the management device. In some other embodiments, the management device may determine to perform capacity expansion for the top-ranking network devices. For example, the management device may perform capacity expansion for top $x_2$ network devices, where $x_2$ is a positive integer greater than or equal to 1 and less than 10.

According to the method shown in FIG. 1, the management device may determine the state of the target network device based on the throughput information and the packet loss information of the target network device. The state of the target network device may reflect the suppressed traffic of the target network device. The suppressed traffic is traffic that should be transmitted continuously at a throughput, but falls back due to a packet loss. Alternatively, in other words, the suppressed traffic is traffic that should be reached as compared with a baseline network device, but is suppressed due to a packet loss rate.

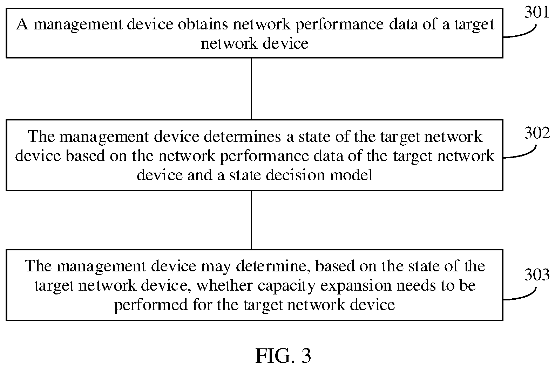

FIG. 3 is a schematic flowchart of another network device capacity expansion method according to an embodiment of this application.

301. A management device obtains network performance data of a target network device.

302. The management device determines a state of the target network device based on the network performance data of the target network device and a state decision model.

303. The management device may determine, based on the state of the target network device, whether capacity expansion needs to be performed for the target network device.

A specific implementation of step 301 is the same as a specific implementation of step 101, and a specific implementation of step 303 is the same as a specific implementation of step 103. For specific implementations of step 301 and step 303, refer to the method shown in FIG. 1. For brevity, step 301 and step 303 are not described in detail herein again.

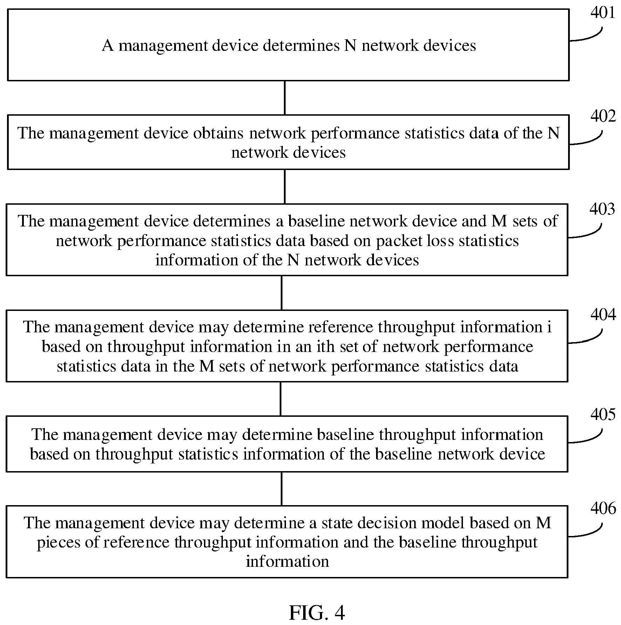

The following describes step 302 with reference to FIG. 4.

FIG. 4 is a schematic flowchart of a method for determining a state decision model. The method shown in FIG. 4 may be performed by the management device, or may be performed by another device. In other words, in some embodiments, the management device may determine the state decision model in step 302 by itself. In some other embodiments, the state decision model in step 302 may be determined by another device (for example, a dedicated model training device). The management device may store the state decision model. For ease of description, the following assumes that the state decision model is determined by the management device.

401. The management device determines N network devices. A bandwidth of each of the N network devices is the same as a bandwidth of the target network device.

402. The management device obtains network performance statistics data of the N network devices. The network performance statistics data includes throughput statistics data and packet loss statistics data. Specific meanings of the throughput statistics data and the packet loss statistics data are the same as the meanings of the throughput statistics data and the packet loss statistics data in the method shown in FIG. 1. For brevity, details are not described herein again.

403. The management device determines a baseline network device and M sets of network performance statistics data based on the packet loss statistics information of the N network devices, where N is a positive integer greater than or equal to 2.

A method for determining the baseline network device in step 403 is the same as the method for determining the baseline network device in the method shown in FIG. 1. For brevity, details are not described herein again.

Each of the M sets of network performance statistics data includes a plurality of pieces of network performance statistic data, and packet loss statistics information in the plurality of pieces of network performance statistics data is the same. In other words, a plurality of pieces of packet loss statistics information included in each of the M sets of network performance statistics data are the same.

The following describes how the management device determines the M sets of network performance statistics data. The network performance statistics data includes packet loss statistics information and throughput statistics information. The packet loss statistics information includes a plurality of pieces of packet loss information, and the throughput statistics information includes a plurality of pieces of throughput information. The plurality of pieces of packet loss information are in a one-to-one correspondence with the plurality of pieces of throughput information. For ease of description, it is assumed that network performance statistics data of a first network device in N' network devices includes $N_1$ pieces of packet loss information and $N_1$ pieces of throughput information, network performance statistics data of a second network device includes $N_2$ pieces of packet loss information and $N_2$ pieces of throughput information, ..., and network performance statistics data of the N'th network device includes $N_{N'}$ pieces of packet loss information and $N_{N'}$ pieces of throughput information. The N' network devices are N-1 network devices other than the baseline network device in the N network devices. In other words, the N' network devices include $N_1+N_2+...+N_{N'}$ pieces of packet loss information and $N_1+N_2+...+N_{N'}$ pieces of throughput information in total. It is still assumed that the packet loss information is a packet loss rate, and the throughput information is a downlink throughput.

$N_1+N_2+...+N_{N'}$ packet loss rates include a same packet loss rate. Excluding the same packet loss rate, the $N_1+N_2+...+N_{N'}$ packet loss rates include M different packet loss rates in total. The M sets of network performance statistics data may be determined based on the M different packet loss rates. It is assumed that a first packet loss rate to an Mth packet loss rate in the M different packet loss rates are packet loss rate $R_1$ to packet loss rate $R_M$ respectively. An ith set of network performance statistics data in the M sets of network performance statistics data includes a plurality of packet loss rates and a plurality of downlink throughputs. The plurality of packet loss rates are all packet loss rate $R_i$, where i is an integer greater than or equal to 1 and less than or equal to M. In other words, each set of network performance statistics data in the M sets of network performance statistics data may also be understood as including one packet loss rate and a plurality of downlink throughputs. A downlink throughput in each set of network performance statistics data corresponds to a packet loss rate in the set of network performance statistics data.

For example, Table 1 shows correspondences between packet loss rates and downlink throughputs of three different network devices. It may be understood that a bandwidth of each of the three different network devices shown in Table 1 is the same as the bandwidth of the target network device.

**Table 1**

| Network device | Packet loss rate | Downlink throughput |
|---|---|---|
| Network device 1 | 1% | 200 Mbit/s |
| | 0.1% | 100 Mbit/s |
| | 0.001% | 50 Mbit/s |
| Network device 2 | 1% | 150 Mbit/s |
| | 0.1% | 100 Mbit/s |
| | 0.001% | 50 Mbit/s |
| Network device 3 | 1% | 150 Mbit/s |
| | 0.1% | 100 Mbit/s |
| | 0.001% | 50 Mbit/s |

As shown in Table 1, when a packet loss rate of network device 1 is 1 %, a downlink throughput is 200 Mbit/s; when the packet loss rate is 0.1%, the downlink throughput is 100 Mbit/s; and when the packet loss rate is 0.001 %, the downlink throughput is 50 Mbit/s.

Based on the network performance statistics data of the three network devices shown in Table 1, three sets of network performance statistics data shown in Table 2 may be obtained.

**Table 2**

| Network performance statistics data set | Packet loss rate | Downlink throughput |
|---|---|---|
| Set 1 | 1% | 200 Mbit/s |
| | 1% | 150 Mbit/s |
| | 1% | 150 Mbit/s |
| Set 2 | 0.1% | 100 Mbit/s |
| | 0.1% | 100 Mbit/s |
| | 0.1% | 100 Mbit/s |
| Set 3 | 0.001% | 50 Mbit/s |
| | 0.001% | 50 Mbit/s |
| | 0.001% | 50 Mbit/s |

404. The management device may determine reference throughput information i based on throughput information in an ith set of network performance statistics data in the M sets of network performance statistics data. The reference throughput information i is used to indicate a probability distribution of the ith set of network performance statistics data with different throughput statistics information when a packet loss rate is $R_i$. In some embodiments, the reference throughput information may be a probability accumulation curve.

405. The management device may determine baseline throughput information based on throughput statistics information of the baseline network device. The baseline throughput information is used to indicate a probability distribution of the baseline network device when throughputs are different. The baseline throughput information may be a baseline probability accumulation curve in the method shown in FIG. 1.

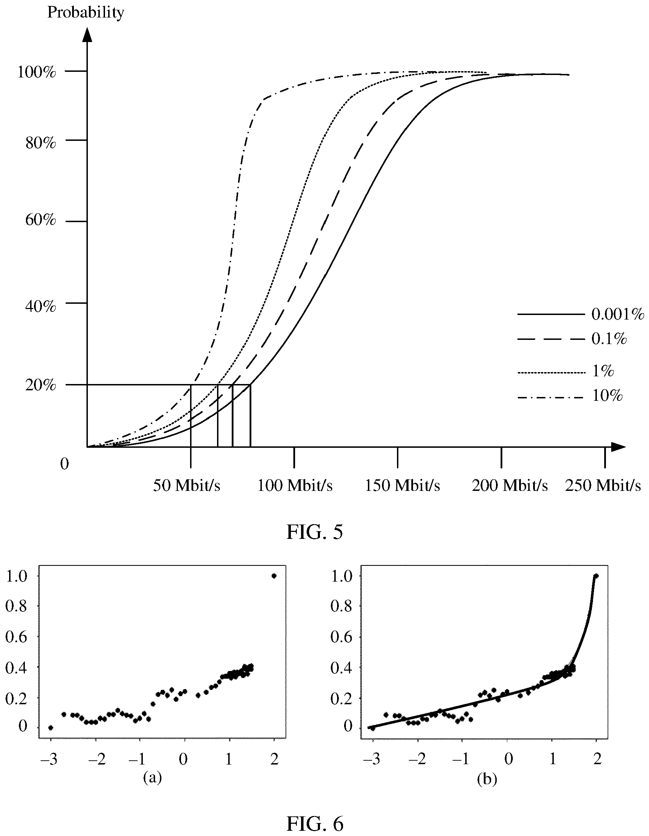

FIG. 5 shows baseline throughput information and a plurality of pieces of reference throughput information. FIG. 5 shows throughput information corresponding to packet loss rates of 0.001%, 0.1%, 1 %, and 10%. For ease of description, throughput information corresponding to a packet loss rate of 0.001% is referred to as throughput information 1, throughput information corresponding to a packet loss rate of 0.1% is referred to as throughput information 2, throughput information corresponding to a packet loss rate of 1 % is referred to as throughput information 3, and throughput information corresponding to a packet loss rate of 10% is referred to as throughput information 4.

It is assumed that throughput information corresponding to a packet loss rate of 0.001% is baseline throughput information. As shown in FIG. 5, when a probability is 20%, throughputs corresponding to throughput information 1 to throughput information 4 are respectively about 50 Mbit/s, 75 Mbit/s, 80 Mbit/s, and 82 Mbit/s. A throughput of 50 Mbit/s corresponding to throughput information 1 when the probability is 20% indicates that when a packet loss rate is 10%, a throughput of 20% of network devices is less than 50 Mbit/s. A throughput of 75 Mbit/s corresponding to throughput information 2 when the probability is 20% indicates that when a packet loss rate is 1%, a throughput of 20% of network devices is less than 75 Mbit/s. A throughput of 80 Mbit/s corresponding to throughput information 3 when the probability is 20% indicates that when a packet loss rate is 0.1 %, a throughput of 20% of network devices is less than 80 Mbit/s. A throughput corresponding to throughput information 4 (that is, the baseline throughput information) is less than 82 Mbit/s when the probability is 20%.

It may be understood that the probability accumulation curve shown in FIG. 5 is merely intended to help persons skilled in the art better understand the technical solutions of this application. In actual implementation, the baseline throughput information and the reference throughput information that are determined by the management device may be only corresponding probability distributions, and the probability accumulation curve does not need to be determined.

406. The management device may determine the state decision model based on M pieces of reference throughput information and the baseline throughput information.

In some embodiments, the management device may determine the state decision model in the following manner:

The baseline throughput information and each piece of reference throughput information is divided into K levels by probability. For example, K=20. The K levels are (0,5%], (5%,10%], (10%,15%], ..., and (95%, 100%]. The management device may determine M sets of <Level,Suppression ratio>. An ith set of <Level,Suppression ratio> in the M sets of <Level,Suppression ratio> is determined based on the reference throughput information i. The ith set of <Level,Suppression ratio> includes K <Level,Suppression ratio>. A jth <Level,Suppression ratio> in the K <Level,Suppression ratio> is determined based on a throughput at the jth level in the reference throughput information i and a throughput at the jth level in the baseline throughput information. Specifically, the suppression ratio may be determined in the following manner:

$$SR_{ij}=1-T_{ij}/T_j,$$

, where

$SR_{ij}$ represents a suppression ratio at the jth level of the reference throughput information i, $T_{ij}$ represents a throughput at the jth level of the reference throughput information i, and $T_j$ represents a throughput at the jth level of the baseline throughput information.

FIG. 5 is still used as an example. When the probability is 20%, corresponding throughputs are respectively about 50 Mbit/s, 75 Mbit/s, 80 Mbit/s, and 82 Mbit/s, where 82 Mbit/s is the throughput of the baseline throughput information. For ease of description, it is assumed that a throughput corresponding to a probability of 20% is a throughput corresponding to a probability of (15%,20%], where (15%,20%] is the fourth level of the 20 levels. In this case, three suppression ratios may be determined: $T_{14}$, $T_{24}$, and $T_{34}$ $T_{44}$, where $T_{14}$=1-50/82=0.39, $T_{24}$=1-75/82=0.085, and $T_{34}$=1-80/82=0.024.

After the M sets of <Level,Suppression ratio> are determined, K pieces of traffic suppression reference information may be determined based on the M sets of <Level,Suppression ratio>. The K pieces of traffic suppression reference information are in a one-to-one correspondence with the K levels of throughput information. The jth piece of traffic suppression reference information in the K pieces of traffic suppression reference information is used to indicate traffic suppression information corresponding to network devices with different packet loss information when the throughput information is at the jth level.

For example, in some embodiments, a curve may be fitted based on <Level,Suppression ratio> information at the jth level in the M sets of <Level,Suppression ratio> information. The curve may reflect traffic suppression information corresponding to network devices with different packet loss rates at the jth level.

For example, FIG. 6 is a schematic diagram of M suppression ratios in a range of (80%,85%]. (a) in FIG. 6 shows a plurality of suppression ratios in a range of (80%,85%]. (b) in FIG. 6 is a suppression ratio curve obtained by fitting the plurality of suppression ratios shown in (a) in FIG. 6. Horizontal axes in (a) and (b) in FIG. 6 represent values obtained after logarithms of packet loss rates are taken, and vertical axes represent suppression ratios.

The management device may fit K curves by using the curve fitting method. In this way, after obtaining a packet loss rate and a throughput of the target network device, the management device may determine a corresponding suppression ratio curve based on the throughput. For example, assuming that a bandwidth of the target network device is 100, and a throughput is 82, bandwidth usage of the target network device is 82%. In this case, the suppression ratio curve corresponding to the target network device is the suppression ratio curve shown in (b) in FIG. 6. Assuming that the packet loss rate of the target network device is 10%, it may be determined, based on the suppression ratio curve shown in (b) in FIG. 6, that the suppression ratio of the target network device is approximately 0.3.

In some embodiments, the suppression ratio of the target network device may be used as the state of the target network device. In this case, the management device may directly determine the state of the target network device by using the suppression ratio curve. In some other embodiments, the state of the target network device may be suppressed traffic (throughput). In this case, the management device may determine the suppressed traffic (throughput) based on the determined suppression ratio and a throughput of the baseline network device at a corresponding level.

For example, the management device may determine the suppressed traffic (throughput) based on the following formula:

$$T_t = T_b - T_b \times SR_t$$

, where
$T_t$ represents the suppressed traffic of the target network device, $T_b$ represents a throughput at a level corresponding to the suppression ratio curve, and $SR_t$ represents the packet loss rate of the target network device.

In some other embodiments, the management device may obtain a state decision function through fitting based on the M pieces of reference throughput information and the baseline throughput information.

In some embodiments, the state decision function may be used to determine a state of a network device with any throughput and packet loss rate. In this case, after the throughput and the packet loss rate of the target network device are obtained, the throughput and the packet loss rate of the target network device may be directly input into the state decision function, and an obtained output is the state of the target network device.

In some other embodiments, the state decision function may include K subfunctions. The K functions are in a one-to-one correspondence with the K levels of throughput. After the throughput and the packet loss rate of the target network device are obtained, a corresponding subfunction may be determined based on the throughput of the target network device. The packet loss rate of the target network device is input into the determined subfunction, and an obtained output is the state of the target network device.

In some other embodiments, the management device may use the detected M pieces of reference throughput information and the baseline throughput information as training data, to train the state decision model.

For example, the management device may determine a training data set based on the M pieces of reference throughput information and the baseline throughput information. The training data set includes a plurality of pieces of training data. Each of the plurality of pieces of training data includes data information and label information. For example, the data information may include a packet loss rate and a downlink throughput, and the label may be any one of a suppression ratio, suppressed traffic, or whether capacity expansion is required. The label information in the data information may be determined and marked manually in advance. The management device may use the training data set to train an initial state decision model, to obtain the state decision model. For example, the management device first initializes a parameter of each layer in the initial state decision model (that is, assigns an initial value to each parameter), and then trains the initial state decision model by using the training data in the training data set. When a loss function in the initial state decision model converges or all the training data in the training data set is used for training, the training is completed and a state decision model that can be used for this solution is obtained.

The initial state decision model may be some existing machine learning models or deep learning models that can be used for classification in the industry, such as, any one of a decision tree (decision tree, DT), a random forest (random forest, RF), logistic regression (logistic regression, LR), a support vector machine (support vector machine, SVM), a convolutional neural network (convolutional neural network, CNN), a recurrent neural network (recurrent neural network, RNN), and the like.

In the method shown in FIG. 4, the state decision model determined by the management device is determined based on network performance statistics data of a network device whose bandwidth is the same as a bandwidth of the target network device. The management device may also determine a plurality of state decision models by using the method shown in FIG. 4. The plurality of state decision models are in a one-to-one correspondence with a plurality of different bandwidths. Different state decision models are used to determine states of network devices with different bandwidths. The management device may determine a corresponding state decision model based on a bandwidth of a target network device.

For example, the management device may determine state decision model 1, state decision model 2, and state decision model 3 by using the method shown in FIG. 4. State decision model 1 is used to determine a state of a network device whose bandwidth is 100 Mbit/s, state decision model 2 is used to determine a state of a network device whose bandwidth is 200 Mbit/s, and state decision model 3 is used to determine a state of a network device whose bandwidth is 500 Mbit/s. If a bandwidth of a network device that needs to be determined by the management device is 500 Mbit/s, the management device may determine a state of the target network device based on state decision model 3 and network performance data of the target network device.

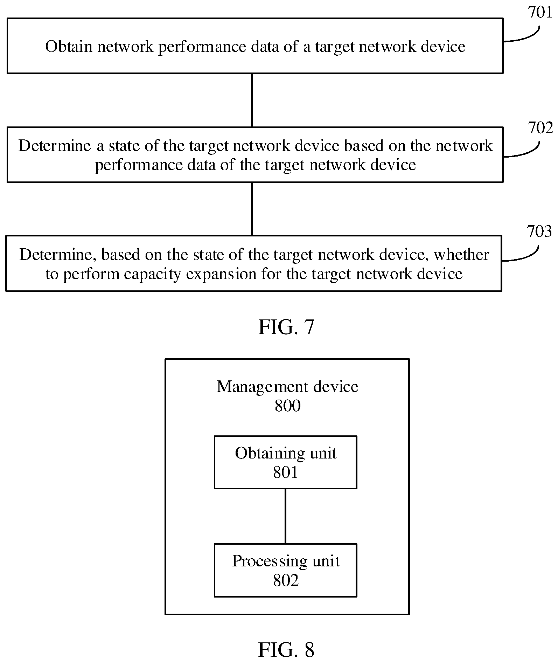

FIG. 7 is a schematic flowchart of a network device capacity expansion method according to an embodiment of this application.

701. Obtain network performance data of a target network device.

702. Determine a state of the target network device based on the network performance data of the target network device.

703. Determine, based on the state of the target network device, whether to perform capacity expansion for the target network device.

Optionally, in some embodiments, the determining a state of the target network device based on the network performance data of the target network device includes: determining a baseline network device; determining state decision information based on network performance statistics data of the baseline network device, and packet loss statistics information of the baseline network device satisfies target packet loss information; and determining the state of the target network device based on the network performance data of the target network device and the state decision information.

Optionally, in some embodiments, the determining a state of the target network device based on the network performance data of the target network device includes: determining the state of the target network device based on a state decision model and the network performance data of the target network device.

Optionally, in some embodiments, a bandwidth of the baseline network device is the same as a bandwidth of the target network device.

Optionally, in some embodiments, the network performance data includes throughput information and packet loss information.

Optionally, in some embodiments, the network performance statistics data includes throughput statistics information and packet loss statistics information.

Optionally, in some embodiments, the state of the target network device may be used to indicate suppressed traffic.

Optionally, in some embodiments, the state decision model is determined in the following manner: determining N network devices, where a bandwidth of each of the N network devices is the same as a bandwidth of the target network device, and N is a positive integer greater than or equal to 2; obtaining network performance statistics data of the N network devices, where the network performance statistics data includes throughput statistics information and packet loss statistics information; determining a reference network device and M sets of network performance statistics data based on the packet loss statistics information of the N network devices, where a plurality of pieces of packet loss statistics information included in each of the M sets of network performance statistics data are the same, packet loss statistics information of the reference network device satisfies target packet loss information, packet loss statistics information included in each of the M sets of network performance statistics data does not satisfy the target packet loss information, and M is a positive integer greater than or equal to 1; and determining the state decision model based on the network performance statistics data of the reference network device and the M sets of network performance statistics data.

Optionally, in some embodiments, the determining the state decision model based on the network performance statistics data of the baseline network device and the M sets of network performance statistics data includes: determining baseline throughput information based on throughput statistics information of the baseline network device, where the baseline throughput information is used to indicate a probability distribution of the baseline network device with different throughput information; determining reference throughput information i based on throughput statistics information in an ith set of network performance statistics data in the M sets of network performance statistics data, where the reference throughput information i is used to indicate a probability distribution of the ith set of network performance statistics data with different throughput statistics information when packet loss statistics information is $R_i$, $R_i$ is packet loss statistics information in the ith set of network performance statistics data, and i=1, ..., or M; and determining the state decision model based on M pieces of reference throughput information and the baseline throughput information.

Optionally, in some embodiments, the state decision model includes K pieces of traffic suppression reference information, the K pieces of traffic suppression reference information are in a one-to-one correspondence with K levels of throughput information, a jth piece of traffic suppression reference information in the K pieces of traffic suppression reference information is used to indicate traffic suppression information corresponding to a network device with different packet loss information when the throughput information is at a jth level, j=1, ..., or K, and K is a positive integer greater than or equal to 1; and the determining a state of the target network device based on a state decision model and the network performance data of the target network device includes: determining target traffic suppression reference information from the K pieces of traffic suppression reference information based on throughput information of the target network device; and determining the state of the target network device based on the target traffic suppression reference information and packet loss information of the target network device.

Optionally, in some embodiments, the determining a baseline network device includes: determining a candidate network device from a plurality of network devices based on bandwidths of the plurality of network devices, where the candidate network device is a network device, in the plurality of network devices, whose bandwidth is the same as a bandwidth of the target network device; determining packet loss statistics information of the at least one candidate network device; and determining the baseline network device based on the packet loss statistics information of the at least one candidate network device.

Optionally, in some embodiments, throughput statistics information of the at least one candidate network device satisfies target throughput information.

Optionally, in some embodiments, the throughput statistics information is throughput information collected in a first time period, and the packet loss statistics information is packet loss information collected in a second time period.

For a specific implementation of each step of the method shown in FIG. 7, refer to the description in FIG. 1, FIG. 3, or FIG. 4. For brevity, details are not described herein again.

FIG. 8 is a schematic structural block diagram of a management device according to an embodiment of this application. The management device shown in FIG. 8 includes an obtaining unit 801 and a processing unit 802.

The obtaining unit 801 is configured to obtain network performance data of a target network device.

The processing unit 802 is configured to determine a state of the target network device based on the network performance data of the target network device that is obtained by the obtaining unit 801.

The processing unit 802 is further configured to determine, based on the state of the target network device, whether to perform capacity expansion for the target network device.

Optionally, in some embodiments, the processing unit 802 is specifically configured to: determine a baseline network device; determine state decision information based on network performance statistics of the baseline network device, and packet loss statistics information of the baseline network device satisfies target packet loss information; and determine the state of the target network device based on the network performance data of the target network device and the state decision information.

Optionally, in some embodiments, the processing unit 802 is specifically configured to determine the state of the target network device based on a state decision model and the network performance data of the target network device.

Optionally, in some embodiments, a bandwidth of the baseline network device is the same as a bandwidth of the target network device.

Optionally, in some embodiments, the network performance data includes throughput information and packet loss information.

Optionally, in some embodiments, the network performance statistics data includes throughput statistics information and packet loss statistics information.

Optionally, in some embodiments, the state of the target network device may be used to indicate suppressed traffic.

Optionally, in some embodiments, the state decision model is determined in the following manner: determining N network devices, where a bandwidth of each of the N network devices is the same as a bandwidth of the target network device, and N is a positive integer greater than or equal to 2; obtaining network performance statistics data of the N network devices, where the network performance statistics data includes throughput statistics information and packet loss statistics information; determining a reference network device and M sets of network performance statistics data based on the packet loss statistics information of the N network devices, where a plurality of pieces of packet loss statistics information included in each of the M sets of network performance statistics data are the same, packet loss statistics information of the reference network device satisfies target packet loss information, packet loss statistics information included in each of the M sets of network performance statistics data does not satisfy the target packet loss information, and M is a positive integer greater than or equal to 1; and determining the state decision model based on the network performance statistics data of the reference network device and the M sets of network performance statistics data.

Optionally, in some embodiments, the processing unit 802 is specifically configured to: determining baseline throughput information based on throughput statistics information of the baseline network device, where the baseline throughput information is used to indicate a probability distribution of the baseline network device with different throughput information; determine reference throughput information i based on throughput statistics information in an ith set of network performance statistics data in the M sets of network performance statistics data, where the reference throughput information i is used to indicate a probability distribution of the ith set of network performance statistics data with different throughput statistics information when packet loss statistics information is $R_i$, $R_i$ is packet loss statistics information in the ith set of network performance statistics data, and i=1, ..., or M; and determine the state decision model based on M pieces of reference throughput information and the baseline throughput information.

Optionally, in some embodiments, the state decision model includes K pieces of traffic suppression reference information, the K pieces of traffic suppression reference information are in a one-to-one correspondence with K levels of throughput information, a jth piece of traffic suppression reference information in the K pieces of traffic suppression reference information is used to indicate traffic suppression information corresponding to a network device with different packet loss information when the throughput information is at a jth level, j=1, ..., or K, and K is a positive integer greater than or equal to 1. The processing unit 802 is specifically configured to: determine target traffic suppression reference information from the K pieces of traffic suppression reference information based on the throughput information of the target network device; and determine the state of the target network device based on the target traffic suppression reference information and the packet loss information of the target network device.

Optionally, in some embodiments, the processing unit 802 is specifically configured to: determine at least one candidate network device from a plurality of network devices based on bandwidths of the plurality of network devices, where the candidate network device is a network device, in the plurality of network devices, whose bandwidth is the same as a bandwidth of the target network device; determine packet loss statistics information of the at least one candidate network device; and determine the baseline network device based on the packet loss statistics information of the at least one candidate network device.

Optionally, in some embodiments, throughput statistics information of the at least one candidate network device satisfies target throughput information.

Optionally, in some embodiments, the throughput statistics information is throughput information collected in a first time period, and the packet loss statistics information is packet loss information collected in a second time period.

For specific functions and beneficial effects of the obtaining unit 801 and the processing unit 802, refer to the foregoing embodiments. For brevity, details are not described herein again.

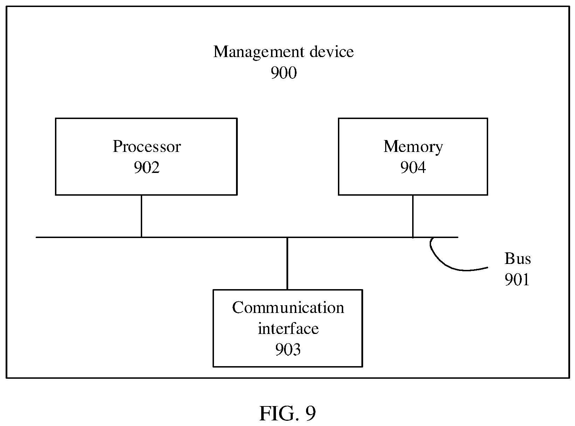

FIG. 9 is a schematic structural block diagram of a management device according to an embodiment of this application. The management device 900 includes a bus 901, a processor 902, a communication interface 903, and a memory 904. The processor 902, the memory 904, and the communication interface 903 communicate with each other through the bus 901. The processor 902 may be a field programmable gate array (field programmable gate array, FPGA), an application-specific integrated circuit (application-specific integrated circuit, ASIC), system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), another programmable logic device, a discrete gate or transistor logic device, a discrete hardware component, or another integrated chip. The memory 904 stores executable code for performing the foregoing method, and the processor 602 reads the executable code in the memory 604 to perform the method shown in FIG. 1, FIG. 3, FIG. 4, or FIG. 7. The memory 604 may further include another software module, such as an operating system, required for running a process. The operating system may be Linux™, Unix™, Windows™, or the like.

The obtaining unit 801 in the management device 800 may be implemented by the communication interface 903 in the management device 900. The processing unit 902 in the management device 800 may be implemented by the processor 902 in the management device 900.

An embodiment of this application further provides a chip system, including a logic circuit. The logic circuit is configured to be coupled to an input/output interface, and transmit data by using the input/output interface, to perform the method shown in FIG. 1, FIG. 3, FIG. 4, or FIG. 7.

In an implementation process, steps in the foregoing methods can be implemented by using a hardware integrated logical circuit in the processor or by using instructions in a form of software. The steps of the methods disclosed with reference to embodiments of this application may be directly performed and completed by a hardware processor, or may be performed and completed by using a combination of hardware and a software module in a processor. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and a software module in a decoding processor. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that the memory in embodiments of this application may be a volatile memory or a nonvolatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

According to the method provided in embodiments of this application, this application further provides a computer program product. The computer program product includes computer program code. When the computer program code is run on a computer, the computer is enabled to perform the method in any one of the embodiments shown in FIG. 1, FIG. 3, FIG. 4, or FIG. 7.

According to the method provided in embodiments of this application, this application further provides a computer-readable medium. The computer-readable medium stores program code. When the program code is run on a computer, the computer is enabled to perform the method in any one of the embodiments shown in FIG. 1, FIG. 3, FIG. 4, or FIG. 7.

According to the method provided in embodiments of this application, this application further provides a system, including the foregoing management device. The system further includes a plurality of network devices.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A network device capacity expansion method, comprising:

obtaining network performance data of a target network device;

determining a state of the target network device based on the network performance data of the target network device; and

determining, based on the state of the target network device, to perform capacity expansion for the target network device.

2. The method according to claim 1, wherein the determining a state of the target network device based on the network performance data of the target network device comprises:

determining a baseline network device;

determining state decision information based on network performance statistics data of the baseline network device, and packet loss statistics information of the baseline network device satisfies target packet loss information; and

determining the state of the target network device based on the network performance data of the target network device and the state decision information.

3. The method according to claim 1, wherein the determining a state of the target network device based on the network performance data of the target network device comprises:

determining the state of the target network device based on a state decision model and the network performance data of the target network device, wherein the state of the target network device is used to indicate suppressed traffic.

4. The method according to claim 3, wherein the state decision model is determined in the following manner:

determining N network devices, wherein a bandwidth of each of the N network devices is the same as a bandwidth of the target network device, and N is a positive integer greater than or equal to 2;

obtaining network performance statistics data of the N network devices, wherein the network performance statistics data comprises throughput statistics information and packet loss statistics information;

determining a baseline network device and M sets of network performance statistics data based on the packet loss statistics information of the N network devices, wherein a plurality of pieces of packet loss statistics information comprised in each of the M sets of network performance statistics data are the same, packet loss statistics information of the baseline network device satisfies target packet loss information, packet loss statistics information comprised in each of the M sets of network performance statistics data does not satisfy the target packet loss information, and M is a positive integer greater than or equal to 1; and

determining the state decision model based on the network performance statistics data of the baseline network device and the M sets of network performance statistics data.

5. The method according to claim 3, wherein the determining the state decision model based on the network performance statistics data of the baseline network device and the M sets of network performance statistics data comprises:

determining baseline throughput information based on throughput statistics information of the baseline network device, wherein the baseline throughput information is used to indicate a probability distribution of the baseline network device with different throughput information;

determining reference throughput information i based on throughput statistics information in an ith set of network performance statistics data in the M sets of network performance statistics data, wherein the reference throughput information i is used to indicate a probability distribution of the ith set of network performance statistics data with different throughput statistics information when packet loss statistics information is $R_i$, $R_i$ is packet loss statistics information in the ith set of network performance statistics data, and i=1, ..., or M; and

determining the state decision model based on M pieces of reference throughput information and the baseline throughput information.

6. The method according to claim 5, wherein the state decision model comprises K pieces of traffic suppression reference information, the K pieces of traffic suppression reference information are in a one-to-one correspondence with K levels of throughput information, a jth piece of traffic suppression reference information in the K pieces of traffic suppression reference information is used to indicate traffic suppression information corresponding to a network device with different packet loss information when the throughput information is at a jth level, j=1, ..., or K, and K is a positive integer greater than or equal to 1; and

the determining a state of the target network device based on a state decision model and the network performance data of the target network device comprises:

determining target traffic suppression reference information from the K pieces of traffic suppression reference information based on throughput information of the target network device; and

determining the state of the target network device based on the target traffic suppression reference information and packet loss information of the target network device.

7. The method according to any one of claims 2 and 4 to 6, wherein the determining a baseline network device comprises:

determining at least one candidate network device from a plurality of network devices based on bandwidths of the plurality of network devices, wherein the candidate network device is a network device, in the plurality of network devices, whose bandwidth is the same as a bandwidth of the target network device;

determining packet loss statistics information of the at least one candidate network device; and

determining the baseline network device based on the packet loss statistics information of the at least one candidate network device.

8. The method according to claim 7, wherein throughput statistics information of the at least one candidate network device satisfies target throughput information.

9. The method according to any one of claims 2 and 4 to 8, wherein the throughput statistics information is throughput information collected in a first time period, and the packet loss statistics information is packet loss information collected in a second time period.

10. A management device, comprising:

an obtaining unit, configured to obtain network performance data of a target network device; and

a processing unit, configured to determine a state of the target network device based on the network performance data of the target network device that is obtained by the obtaining unit, wherein

the processing unit is further configured to determine, based on the state of the target network device, whether to perform capacity expansion for the target network device.

11. The management device according to claim 10, wherein the processing unit is specifically configured to:

determine a baseline network device;

determine state decision information based on network performance statistics data of the baseline network device, and packet loss statistics information of the baseline network device satisfies target packet loss information; and

determine the state of the target network device based on the network performance data of the target network device and the state decision information.

12. The management device according to claim 10, wherein the processing unit is specifically configured to: determine the state of the target network device based on a state decision model and the network performance data of the target network device, wherein the state of the target network device is used to indicate suppressed traffic.

13. The management device according to claim 12, wherein the state decision model is determined in the following manner:

determining N network devices, wherein a bandwidth of each of the N network devices is the same as a bandwidth of the target network device, and N is a positive integer greater than or equal to 2;

obtaining network performance statistics data of the N network devices, wherein the network performance statistics data comprises throughput statistics information and packet loss statistics information;

determining a baseline network device and M sets of network performance statistics data based on the packet loss statistics information of the N network devices, wherein a plurality of pieces of packet loss statistics information comprised in each of the M sets of network performance statistics data are the same, packet loss statistics information of the baseline network device satisfies target packet loss information, packet loss statistics information comprised in each of the M sets of network performance statistics data does not satisfy the target packet loss information, and M is a positive integer greater than or equal to 1; and

determining the state decision model based on the network performance statistics data of the baseline network device and the M sets of network performance statistics data.

**14.** The management device according to claim 12, wherein the processing unit is specifically configured to:

determine baseline throughput information based on throughput statistics information of the baseline network device, wherein the baseline throughput information is used to indicate a probability distribution of the baseline network device with different throughput information;
determine reference throughput information i based on throughput statistics information in an ith set of network performance statistics data in the M sets of network performance statistics data, wherein the reference throughput information i is used to indicate a probability distribution of the ith set of network performance statistics data with different throughput statistics information when packet loss statistics information is $R_i$, $R_i$ is packet loss statistics information in the ith set of network performance statistics data, and i=1, ..., or M; and
determine the state decision model based on M pieces of reference throughput information and the baseline throughput information.

**15.** The management device according to claim 14, wherein the state decision model comprises K pieces of traffic suppression reference information, the K pieces of traffic suppression reference information are in a one-to-one correspondence with K levels of throughput information, a jth piece of traffic suppression reference information in the K pieces of traffic suppression reference information is used to indicate traffic suppression information corresponding to a network device with different packet loss information when the throughput information is at a jth level, j=1, ..., or K, and K is a positive integer greater than or equal to 1; and

the processing unit is specifically configured to: determine target traffic suppression reference information from the K pieces of traffic suppression reference information based on throughput information of the target network device; and
determine the state of the target network device based on the target traffic suppression reference information and packet loss information of the target network device.

**16.** The management device according to any one of claims 11 and 13 to 15, wherein the processing unit is specifically configured to:

determine at least one candidate network device from a plurality of network devices based on bandwidths of the plurality of network devices, wherein the candidate network device is a network device, in the plurality of network devices, whose bandwidth is the same as a bandwidth of the target network device;
determine packet loss statistics information of the at least one candidate network device; and
determine the baseline network device based on the packet loss statistics information of the at least one candidate network device.

**17.** The management device according to claim 16, wherein throughput statistics information of the at least one candidate network device satisfies target throughput information.

**18.** The management device according to any one of claims 11 and 13 to 17, wherein the throughput statistics information is throughput information collected in a first time period, and the packet loss statistics information is packet loss information collected in a second time period.

**19.** A management device, comprising a processor, wherein the processor is configured to be coupled to a memory, and read and execute instructions and/or program code in the memory, so as to perform the method according to any one of claims 1 to 9.

**20.** A chip system, comprising a logic circuit, wherein the logic circuit is configured to be coupled to an input/output interface, and transmit data through the input/output interface, so as to perform the method according to any one of claims 1 to 9.

**21.** A computer-readable medium, wherein the computer-readable medium stores program code, and when the computer program code is run on a computer, the computer is enabled to perform the method according to any one of claims 1 to 9.

| | | |
|---|---|---|
| A management device obtains network performance data of a target network device | | 101 |

| | | |
|---|---|---|
| The management device determines a state of the target network device based on the network performance data of the target network device and state decision information | | 102 |

| | | |
|---|---|---|
| The management device may determine, based on the state of the target network device, whether capacity expansion needs to be performed for the target network device | | 103 |

FIG. 1

FIG. 2

A management device obtains network performance data of a target network device | 301

The management device determines a state of the target network device based on the network performance data of the target network device and a state decision model | 302

The management device may determine, based on the state of the target network device, whether capacity expansion needs to be performed for the target network device | 303

FIG. 3

| | 401 |
|---|---|
| A management device determines N network devices | |

| | 402 |
|---|---|
| The management device obtains network performance statistics data of the N network devices | |

| | 403 |
|---|---|
| The management device determines a baseline network device and M sets of network performance statistics data based on packet loss statistics information of the N network devices | |

| | 404 |
|---|---|
| The management device may determine reference throughput information i based on throughput information in an ith set of network performance statistics data in the M sets of network performance statistics data | |

| | 405 |
|---|---|
| The management device may determine baseline throughput information based on throughput statistics information of the baseline network device | |

| | 406 |
|---|---|
| The management device may determine a state decision model based on M pieces of reference throughput information and the baseline throughput information | |

FIG. 4

FIG. 5

FIG. 6

Obtain network performance data of a target network device — 701

Determine a state of the target network device based on the network performance data of the target network device — 702

Determine, based on the state of the target network device, whether to perform capacity expansion for the target network device — 703

FIG. 7

Management device
800

Obtaining unit
801

Processing unit
802

FIG. 8

Management device
900

Processor
902

Memory
904

Bus
901

Communication
interface
903

FIG. 9

## INTERNATIONAL SEARCH REPORT

International application No.

**PCT/CN2021/079993**

| A. | CLASSIFICATION OF SUBJECT MATTER |
|---|---|

H04L 12/24(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

WPI; EPODOC; CNKI; CNPAT: 扩容, 容量, 调整, 状态, 吞吐量, 流量, 性能, 网络, expand, increase, capacity, adjust, state, throughout, traffic, performance, network

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108259225 A (CHINA UNITED NETWORK COMMUNICATIONS GROUP CO., LTD.) 06 July 2018 (2018-07-06)<br>  description, paragraphs 31-46, 50-75 | 1-21 |
| A | CN 102447579 A (GPGC ELECTRIC POWER RESEARCH INSTITUTE) 09 May 2012 (2012-05-09)<br>  entire document | 1-21 |
| A | CN 110248369 A (CHINA UNITED NETWORK COMMUNICATIONS GROUP CO., LTD.) 17 September 2019 (2019-09-17)<br>  entire document | 1-21 |
| A | WO 2016173203 A1 (ZTE CORP.) 03 November 2016 (2016-11-03)<br>  entire document | 1-21 |
| A | US 2015195178 A1 (CIENA CORPORATION) 09 July 2015 (2015-07-09)<br>  entire document | 1-21 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 May 2021** | **31 May 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/079993**

| Patent document<br>cited in search report | | | Publication date<br>(day/month/year) | Patent family member(s) | | | Publication date<br>(day/month/year) |
|---|---|---|---|---|---|---|---|
| CN | 108259225 | A | 06 July 2018 | None | | | |
| CN | 102447579 | A | 09 May 2012 | None | | | |
| CN | 110248369 | A | 17 September 2019 | None | | | |
| WO | 2016173203 | A1 | 03 November 2016 | CN | 106209484 | A | 07 December 2016 |
| US | 2015195178 | A1 | 09 July 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010162242